# EUROPÄISCHE PATENTSCHRIFT

(11) **EP 1 110 769 B1**
(45) Veröffentlichungstag und Bekanntmachung des Hinweises auf die Patenterteilung: **16.03.2005**
(21) Anmeldenummer: 00122936.8
(22) Anmeldetag: 21.10.2000
(51) Int. Cl.: B60H 1/00

(54) **Heizungs- oder Klimaanlage für ein Kraftfahrzeug**
Heating or air conditioning system for motor vehicle
Dispositif de chauffage ou climatisation pour véhicule automobile

(30) Priorität: 21.12.1999 DE 19962084
(43) Veröffentlichungstag der Anmeldung: 27.06.2001
(73) Patentinhaber: Behr GmbH & Co. KG, 70469 Stuttgart (DE)
(72) Erfinder: Bendell, Ian, 71297 Mönsheim (DE); Bernlöhr, Peter, 70567 Stuttgart (DE); Dieksander, Wolfgang, 70794 Filderstadt (DE)

(56) Entgegenhaltungen:
- DE-A- 19 739 578
- FR-A- 2 778 152
- US-A- 5 042 566

## Beschreibung

Die Erfindung betrifft eine Heizungs- oder Klimaanlage für ein Kraftfahrzeug, mit dem einzelne Klimatisierungszonen des Fahrzeuginnenraums mit separat temperierbarer Luft versorgt werden können, gemäß dem Oberbegriff des Anspruchs 1.

Aus der FR 2717747 ist ein Klimatisierungssystem bekannt, mit dem die Temperatur der den verschiedenen Klimatisierungszonen, nämlich den Zonen "vorne rechts" (Beifahrersitz) und "vorne links" (Fahrersitz) sowie den Zonen "Fondraum links" und "Fondraum rechts", zugeführten Luft separat einstellbar ist. Dazu weist das Klimasystem zwei, jeweils die linke bzw. rechte Fahrzeughälfte versorgende Klimaanlagen auf. Mit jeder der Klimaanlagen können der Frontbereich und der Fondbereich mit unterschiedlich temperierter Luft versorgt werden. Dieses Klimatisierungssystem ist sehr aufwendig, da es zwei Klimaanlagen mit jeweils einem Gebläse, Verdampfer und Heizkörper und entsprechenden Luftleitungen aufweist. Das System ist daher entsprechend konstenungünstig und kann nur in Großraumfahrzeugen aufgrund des großen Platzbedarfs eingesetzt werden.

Aus der DE 197 39 578 A1 ist eine luftseitig geregelte Klimaanlage bekannt, bei der der Raum hinter einem Heizkörper, in dem unter dem Heizkörper vorbeigeführte Kaltluft mit Warmluft mischbar ist, in vier nebeneinanderliegende und durch Trennwände getrennte Luftmischräume unterteilt ist. Die Trennwände erstrecken sich bis unter den Heizkörper und unterteilen den Kaltluftbypass ebenfalls in vier Teilkanäle. Über direkt hinter dem Heizkörper angeordnete Warmluftklappen und die Kaltluftbypässe verschließende Kaltluftklappen ist in jedem Mischraum eine individuelle Temperatur unabhängig von den Temperaturen in den anderen Mischräumen einstellbar. Die individuell temperierte Luft der einzelnen Luftmischräume ist über Luftkanäle den entsprechenden Klimatisierungszonen zuführbar.

Heutige Lüftungs-, Heizungs- oder Klimaanlagen mit ihren Komponenten, insbesondere den Luftklappen, liegt das allgemeine Problem zugrunde, daß der zur Verfügung stehende Bauraum für die Klimaanlage sehr begrenzt ist und daher diese Anlagen immer kompakter gebaut werden müssen. Insbesondere Klimaanlagen, die zur unterschiedlichen Temperierung von verschiedenen Klimatisierungszonen geeignet sind, benötigen aufgrund ihrer größeren Anzahl von Bauteilen einen größeren Bauraum.

Ausgehend von diesem Stand der Technik ist es Aufgabe der Erfindung, eine verbesserte Heizungs- oder Klimaanlage bereitzustellen, mit der jeweils individuell temperierbare Luft für die unterschiedlichen Klimatisierungszonen des Fahrzeugs bereitstellbar ist und die einen möglichst kleinen Bauraum benötigt.

Diese Aufgabe wird erfindungsgemäß gelöst durch eine gattungsgemäße Heizungs- oder Klimaanlage mit den kennzeichnenden Merkmalen des Anspruchs 1.

Erfindungsgemäß ist vorgesehen, daß wenigstens ein erster in dem Heizkörper zu erwärmender Teilluftstrom einen ersten, zugeordneten Teilbereich des Heizkörpers in eine erste Richtung durchströmt und wenigstens ein zweiter, in dem Heizkörper zu erwärmender Teilluftstrom einen zweiten, zugeordneten Teilbereich des Heizkörpers in eine zweite, der ersten Richtung entgegengesetzte Richtung durchströmt. Mit dieser Aufteilung des zu erwärmenden Luftstromes in wenigstens zwei Teilluftströme, die den Heizkörper in entgegengesetzte Richtung durchströmen ist eine ungewöhnliche Aufteilung und Führung der Luftströmung geschaffen, die es aber ermöglicht, daß der dem ersten Teilluftstrom zugeordnete Luftmischraum auf der einen Seite des Heizkörpers und der dem zweiten Teilluftstrom zugeordnete Luftmischraum auf der anderen Seite des Heizkörpers angeordnet werden kann, so daß die Luftmischräume weiter voneinander getrennt sind als wenn sie auf der gleichen Seite des Heizkörpers angeordnet wären. Dadurch kann der für die Klimaanlage zur Verfügung stehende Bauraum geschickt genutzt werden. Die Klimaanlage kann wesentlich kompakter aufgebaut werden und die Luftkanäle, die von den einzelnen Luftmischräumen zu den Klimatisierungszonen im Fahrzeuginnenraum führen, können im Bereich der Klimaanlage problemloser geführt werden. Von dem Luftmischraum, von dem aus Luft in den Frontraumbereich geführt werden soll, gehen in der Regel wenigstens drei Luftkanäle, nämlich in den Fußraum, zu den Belüftungsdüsen und zu der Defrosterdüse ab. Diese drei Kanäle benötigen, insbesondere im Anschlußbereich, an den Luftmischraum einen entsprechenden Bauraum, der bei Klimaanlagen aus dem Stand der Technik kaum zur Verfügung steht, da dort die Luftmischräume auf der gleichen Seite des Heizkörpers angeordnet sind. Gemäß der Erfindung ist jedoch der zweite Luftmischraum auf der anderen Seite des Heizkörpers angeordnet, so daß Raum geschaffen ist für die Anordnung der Luftkanäle.

Durch die deutliche Reduzierung des Bauraums ist weiterer Platz geschaffen für zusätzliche, in der Instrumententafel angeordnete Geräte, wie beispielsweise Navigationsgerät, CD-Spieler oder dergleichen.

Mit besonderem Vorteil ist der Heizkörper in etwa flachliegend angeordnet, also insbesondere in etwa in einem rechten Winkel zum Verdampfer, so daß der erste Teilluftstrom den Heizkörper von oben nach unten und der zweite von unten nach oben oder umgekehrt durchströmen kann. Die Luftmischräume sind dann oberhalb und unterhalb des Heizkörpers angeordnet. In dieser Anordnung sind die Umlenkungen der durch die Klimaanlage geführten Luft erheblich reduziert. Die Kaltluft strömt dabei im wesentlichen an dem Heizkörper vorbei, wohingegen die zu erwärmende Luft lediglich geringfügig umgelenkt werden muß, um den Heizkörper von unten nach oben oder von oben nach unten zu durchströmen. Dadurch können Druckverluste vermieden werden und insbesondere Luftströmungsgeräusche stark reduziert werden.

Ein weiterer, wesentlicher Vorteil der erfindungsgemäßen Klimaanlage ist ihre Kostenneutralität. Die erfindungsgemäße Ausführung verursacht keinerlei zusätzliche Kosten gegenüber bekannten Klimaanlagen für die Klimatisierung von vier unterschiedlichen Klimatisierungszonen.

In einer bevorzugten Ausführungsform sind drei in etwa parallel verlaufende Trennwände vorgesehen, so daß die Teilbereiche des Heizkörpers, in denen jeweils ein Teilluftstrom erwärmt wird, nebeneinander angeordnet sind und auf jeder Seite des Heizkörpers somit jeweils zwei Luftmischräume für insgesamt vier Klimatisierungszonen gebildet sind. Damit ist eine Klimaanlage zur Klimatisierung von vier Klimatisierungszonen geschaffen, die einen möglichst kleinen Bauraum aufweist. Die sich an die auf beiden Seiten des Heizkörpers angeordneten Luftmischräume anschließenden Luftkanäle können in einfacher Weise angeordnet werden ohne daß Platzprobleme auftreten.

Vorteilhafterweise sind die beiden außenliegenden Luftmischräume dem Fondraum links und rechts und die beiden innen liegenden Luftmischräume dem Frontraum links und rechts zugeordnet oder umgekehrt. Insbesondere ist es vorteilhaft, wenn die den Teilluftströmen für den Fondraum zugeordneten äußeren Teilbereich des Heizkörpers von oben nach unten und die den Teilluftströmen für den Frontraum zugeordneten inneren Teilbereiche des Heizkörpers von unten nach oben durchströmt werden, da dann die Luftmischräume für den Fondraum unten, also unterhalb des Heizkörpers und die für den Frontraum oberhalb des Heizkörpers angeordnet sind, so daß die sich an die Luftmischräume für den Fondraum anschließenden Luftführungskanäle nach unten im Bereich des Fahrzeugbodens in den Fondraum geführt werden können und die sich an die Luftmischräume für den Frontraum nach oben, bzw. zur Seite oberhalb der außenliegenden Bereiche und Luftmischräume für den Fond hinweg zu den entsprechenden Ausströmern für den Fußraum, die Belüftung und die Defrostdüsen geführt werden können.

Vorteilhafterweise erstreckt sich die auf jeden Fall luftseitig stromabwärts des Heizkörpers angeordnete Trennwand auch stromaufwärts des Heizkörpers durch den Kaltluftkanal und bis in einen Kaltluftbereich zwischen einem Verdampfer und dem Heizkörper, so daß die zu erwärmende Luft bereits ausgehend vom Kaltluftbereich bis zu den einzelnen Luftmischräumen getrennt geführt wird.

In einer Ausgestaltung der Erfindung sind die Luftstromsteuerelemente als in etwa mittig gelagerte Drehklappen ausgebildet, die leicht gebogen ausgeführt sind, damit die Drehklappen in ihrer Offenstellung die vorbeiströmende Luftströmung günstig führen können. Bei Veränderung der Temperatureinstellung, durch Öffnen oder Schließen der Kaltluft- oder Warmluftklappen werden nur geringe Variationen der Luftmenge erreicht. Dadurch können instabile Luftströmung beim Übergang der Klappen von einer Warmluftstellung in eine Kaltluftstellung oder umgekehrt vermieden werden.

In einer Ausgestaltung der Erfindung ist der Heizkörper als ein mit Kühlmittel für ein Antriebsaggregat des Kraftfahrzeugs durchströmbarer Wärmetauscher ausgebildet, in dem elektrische Heizelemente integriert sind. Dann kann in der Kaltstartphase des Motors über die elektrischen Heizelemente bereits eine ausreichende Heizleistung, unabhängig von der Durchströmungsrichtung der zu erwärmenden Luft durch den Heizkörper, erzielt werden. Der Heizkörper kann einstückig ausgebildet sein. Alternativ könnte der Heizkörper aber auch aus zwei nebeneinander angeordneten Einzelheizkörpern ausgebildet sein, wobei der eine Einzelheizkörper für die Erwärmung der Luft für die linke Fahrzeughälfte (Front- und Fondraum) und der andere für die rechte Fahrzeughälfte (Front- und Fondraum) vorgesehen ist. Eine Trennwand würde dann zwischen den Einzelheizkörpem verlaufen und jeder Einzelheizkörper wäre durch je eine weitere Trennwand in zwei Teilbereiche jeweils für Front- und Fondraum aufgeteilt.

Im folgenden wird die Erfindung anhand eines Ausführungsbeispiels unter Bezugnahme auf die Zeichnung im einzelnen erläutert.

In der Zeichnung zeigen:
- Fig. 1: einen Querschnitt einer erfindungsgemäßen Klimaanlage entlang einer Linie I-I aus Fig. 3 im Bereich der Luftführung für Luft, die einem Frontbereich des Fahrzeuginnenraums zuführbar ist;
- Fig. 2: einen Querschnitt der erfindungsgemäßen Klimaanlage der parallel zum Querschnitt der Fig. 1 verläuft entlang einer Linie II-II aus Fig. 3 im Bereich der Luftführung für Luft, die einem Fondbereich des Fahrzeuginnenraums zuführbar ist;
- Fig. 3: einen Querschnitt der erfindungsgemäßen Klimaanlage entlang der Linien III-III aus den Fig. 1 und 2.

Eine in der Zeichnung dargestellte, erfindungsgemäße Heizungs- oder Klimaanlage 10 weist ein Gehäuse 12 zur Führung von zu temperierender Luft auf. Umluft und/oder Frischluft wird über ein nicht dargestelltes Gebläse und einen Luftzuführkanal 14 einem Verdampfer 16 zur Abkühlung zugeführt. Die im Verdampfer 16 abgekühlte Luft tritt aus dem Verdampfer 16 an seiner Luftaustrittsseite 18 aus und in einen Kaltluftbereich 20 ein, der sich stromab des Verdampfers 16 über die gesamte Höhe des Verdampfer 16 erstreckt. Vom Kaltluftbereich 20 wird entweder Kaltluft an einem Heizkörper 22 vorbei und direkt Luftkanälen zugeführt, wie weiter unten näher beschrieben ist, oder ein Teil der Kaltluft wird über den Heizkörper 22 geführt und dort erwärmt und dann den Luftleitkanälen zugeführt. Zur Erzielung einer bestimmten Temperatur der mittels der Luftkanäle in den Fahrzeuginnenraum geleiteten Luft ist die Kaltluft mit der Warmluft mischbar, wie dies im einzelnen weiter unten beschrieben wird. Der Heizkörper 22 ist bevorzugt als ein mit einem Kühlmittel für ein Antriebsagregat des Kraftfahrzeugs durchströmbarer Wärmetauscher ausgebildet und weist optional zusätzlich elektrische Heizelemente auf. Ein solcher Wärmetauscher ist beispielsweise aus der DE 44 33 814 bekannt.

Am unteren Ende des Kaltluftbereichs 20 ist ein Wasserablauf 24 vorgesehen, durch den im Verdampfer kondensiertes und aus der Luftaustrittsseite 18 ausgetragenes Kondenswasser ablaufen kann.

Die erfindungsgemäße Klimaanlage 10 ist zur Klimatisierung von vier unterschiedlichen Klimatisierungszonen im Fahrzeuginnenraum geeignet. Die vier Klimatisierungszonen sind in der Regel der Fahrerbereich, mit VL (vorne links) bezeichnet, der Beifahrerbereich, mit VR (vorne rechts) bezeichnet, der Fondbereich links, mit HL (hinten links) bezeichnet, und der Fondbereich rechts, mit HR (hinten rechts) bezeichnet.

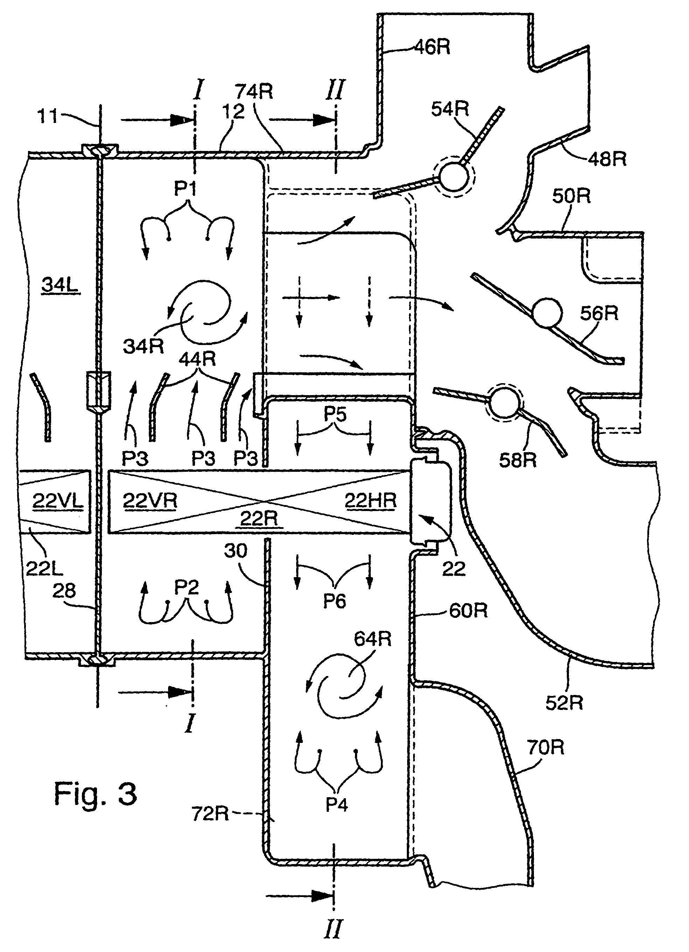

Damit die Luft für die einzelnen Zonen getrennt voneinander temperierbar ist, ist die Klimaanlage stromabwärts des Kaltluftbereichs 20 durch drei Trennwände in vier nebeneinander liegende, den Zonen HL, VL, VR und HR zugeordneten Bereichen unterteilt. Von den drei Trennwänden sind wegen der zu einer Mittelebene M symmetrisch ausgebildeten Anlage, von der in Fig. 3 nur die rechte Hälfte dargestellt ist, nur die Trennwände 28 und 30 dargestellt, wobei die Trennwand 28 in der Mittelebene M liegt. Die Trennwände erstrecken sich luftstromseitig sowohl vor und hinter dem Heizkörper 22 von dem Kaltluftbereich 20 bis zu Austrittsöffnungen an denen sich Luftkanäle anschließen. Luftseitig sind damit die nebeneinander angeordneten Bereiche, in denen jeweils ein Teilluftstrom zur Versorgung der jeweiligen Zone HL, VL, VR bzw. HR geführt wird, getrennt. Der Heizkörper 22 ist in bekannter Weise als Wärmetauscher ausgebildet, wobei die das Kühlmittel des Antriebsaggregats führenden Rohre eines Rohrrippenheizblocks parallel zu den Trennwandebenen verlaufen, so daß die durch den Heizkörper geführten Teilluftströme der einzelnen Bereiche auch beim Durchströmen des Heizkörpers 22 nicht miteinander vermischt werden.

Alternativ könnten auch, wie in Fig. 3 dargestellt, zwei Einzelheizkörper 22L und 22R zum Einsatz kommen, so daß die mittlere Trennwand 28 im Bereich der Heizkörper 22L und 22R durchgehend ist. Die Einzelheizkörper 22L und 22R sind in einer gemeinsamen Ebene nebeneinanderliegend angeordnet und bilden zusammen den Heizkörper 22.

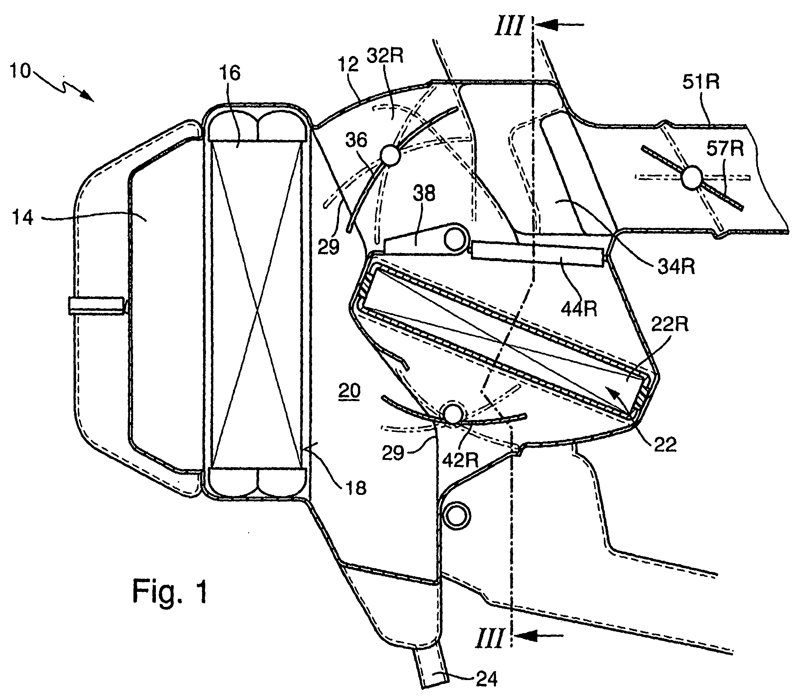

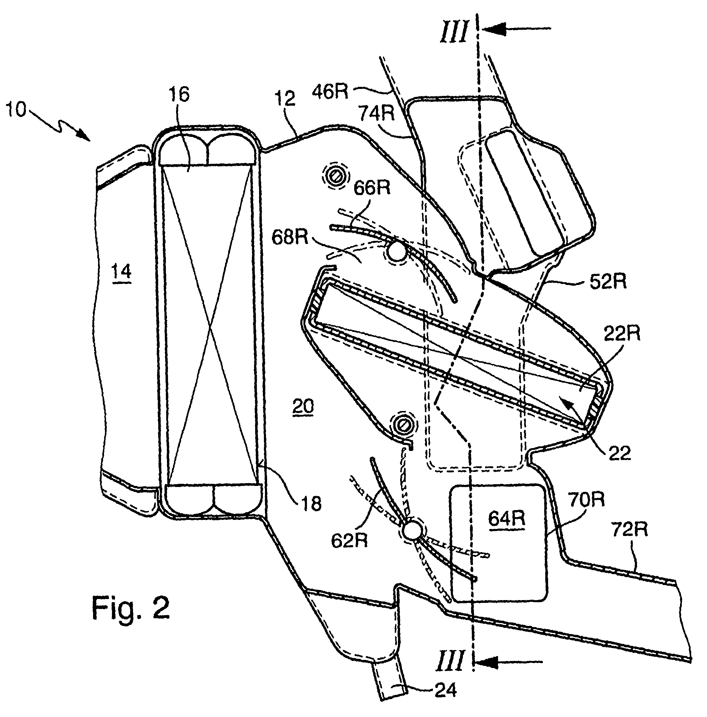

Die erfindungsgemäße Klimaanlage ist symmetrisch zu einer Mittelebene M ausgebildet, in der auch die mittlere Trennwand 28 liegt. Für das Verständnis des Aufbaus der erfindungsgemäßen Klimaanlage ist es daher ausreichend, die Querschnitte aus den Figuren 1 und 2 entlang der Linien I-I und II-II aus der Fig. 3 zusammen mit der Darstellung aus Fig. 3 zu betrachten.

Zunächst werden anhand der Fig. 1 und 3 die Bereiche und Elemente der Klimaanlage beschrieben, die für die Klimatisierung des Frontbereiches VR relevant sind:
Von dem Kaltluftbereich 20 kann Kaltluft über einen oberhalb des Heizkörpers 22R angeordneten Kaltluftkanal 32R in einen Mischraum 34R eintreten (Pfeile P1). Der Kaltluftkanal 32R ist über eine Kaltluftbypassklappe 36 verschließbar. Der Kaltluftkanal 32R ist dabei begrenzt durch das Gehäuse 12 und ein Gehäuseelement 38, sowie durch die Trennwände 28 und 30. In Fig. 1 ist ober- und unterhalb des Heizkörpers 22 die luftanströmseitige Kante 29 der Trennwand 30 zu erkennen.

Über eine Klappe 42R, die luftstromseitig vor dem Heizkörper 22R angeordnet ist, kann zu erwärmende Kaltluft aus dem Kaltluftbereich 20 von unten in einen Teilbereich 22VR des Heizkörper 22R eintreten (Pfeile P2) und durch diesen hindurchströmen und dabei erwärmt werden. Die Warmluft (Pfeile P3) kann durch eine mit Warmluftklappen 44R verschließbare Warmluftöffnung in den Mischraum 34R eintreten und dort mit der Kaltluft vermischt werden. Die Warmluftklappe 44R kann als einstückige Schwenkklappe ausgebildet sein oder aus mehreren Teilklappen 44R bestehen (Fig.3).

An den Luftmischraum 34R schließt sich ein Zwischenstück 74R an, von dem ein Defrostluftkanal 46R, ein Luftkanal 48R zu einer an der rechten Fahrzeugseite angeordneten Defrostseitendüse, ein Luftkanal 50R zu einer Belüftungsdüse auf der rechten Fahrzeugseite, ein Luftkanal 51R zu einer in der Mitte der Instrumententafel angeordnete Belüftungsdüse und ein Fußraumluftkanal 52R abzweigen. Die Luftkanäle sind jeweils über eine Klappe 54R, 56R, 57R bzw. 58R verschließbar (Fig. 3).

Die Luftkanäle 46R, 48R, 50R, 51R und 52R führen jeweils nur in die rechte Fahrzeughälfte, so daß der Teilbereich zwischen den Trennwänden 28 und 30 zur Temperierung der Luft für die Zone VR dient.

Da die Klimaanlage spiegelsymmetrisch zur Mittelebene M ausgebildet ist, wird in analoger Weise in dem Teilbereich zwischen den Trennwänden 26 und 28 die Luft für die Zone VL temperiert und von dem entsprechenden Luftmischraum 34L in entsprechende Luftkanäle, die nicht näher dargestellt sind, geführt.

Die beiden innen liegenden Teilbereich zwischen den Trennwänden dienen somit der Temperierung der Luft für den Frontraum, wobei die Heizkörperteilbereiche 22VL bzw. 22VR von unten nach oben durchströmt wird.

Nach außen zur Seite der Klimaanlage hin (Fig. 3) sind neben den beiden innen liegenden Teilbereichen weitere Teilbereiche angeordnet, wobei der Teilbereich zwischen der Trennwand 30 und einer Seitenwand 60R des Gehäuses 12 dem Fondraum rechts (HR) zugeordnet ist und dementsprechend der Teilbereich zwischen der in Fig.3 nicht dargestellten linken Trennwand und einer linken Seitenwand (in Fig. 3 nicht dargestellt) dem Fondraum links (HL) zugeordnet ist.

Fig. 2 zeigt einen Querschnitt entlang der Linie II-II aus Fig. 3, also durch den Teilbereich in dem die Luft für die Zone HR temperiert wird. Hier ist eine Kaltluftbypassklappe 62R unterhalb des Heizkörpers 22R angeordnet, so daß Kaltluft von dem Kaltluftbereich 20 in einen unterhalb des Heizkörpers 22R angeordneten Luftmischraum 64R einströmen kann (Pfeile P4). Oberhalb des Heizkörpers 22R ist luftstromseitig vor dem Heizkörper eine Klappe 66R angeordnet, die eine Einlaßöffnung 68R freigeben kann, durch die Kaltluft von oben in den Teilbereich 22 HR des Heizkörpers 22R eintreten kann (Pfeile P5) und dort erwärmt wird. Die aus dem Teilbereich 22HR austretende Warmluft dringt unmittelbar in den Luftmischraum 64R ein (Pfeile P6). Von dem Luftmischraum 64R kann die dort auf eine bestimmte Temperatur gemischte Luft über einen Fondfußraum/Fonddefrost-Luftkanal 70R und einen Fondbelüftungsluftkanal 72R der entsprechenden Fondraumzone HR zugeführt werden. Der Fondfußraum/Fonddefrost-Luftkanal 70R führt in der Regel wärmere Luft als der Fondbelüftungskanal 72R, um dem Fondfußraum und/oder den Fondfensterscheiben wärmere Luft zuführen zu können.

In analoger Weise ist die Luft für die Fondraumzone HL temperierbar.

Wie insbesondere aus Fig. 3 hervorgeht, sind die Luftmischräume 34R und 34L von denen aus die Luft zum Frontraum geführt wird oberhalb des Heizkörpers 22 und die Luftmischräume 64R und 64L unterhalb des Heizkörpers 22 angeordnet, so daß die sich an den Luftmischräumen anschließenden Luftkanäle in vorteilhafter und Bauraum sparender Weise übereinander angeordnet werden können. Insbesondere die Luftkanäle 46R, 48R, 50R, 52R mit ihrem die Eintrittsöffnungen der Luftkanäle mit dem Luftmischraum 34R verbindenden Zwischenstück 74R sind quasi auf den Teilbereich des Gehäuses, der zwischen der Trennwand 30 und der Seitenwand 60R angeordnet ist, draufgesetzt (Fig.3).

Die Luftklappen sind teilweise gebogen, teilweise abgewinkelt ausgeführt, um jeweils die an den Luftklappen vorbeiströmende Luft strömungsgünstig führen zu können.

Bevorzugt sind zwei Bediengeräte, nämlich eines im Frontbereich und eines im Fondbereich, vorgesehen, von denen aus die erfindungsgemäße Heizungs- oder Klimaanlage zur Temperierung der jeweiligen Klimatisierungszone steuerbar ist, wobei die Temperaturregelung über je einen Temperatursensor im Front- bzw. Fondbereich, ausgehend von eingestellten Temperatursollwerten, automatisch erfolgt.

## Patentansprüche

1. Heizungs- oder Klimaanlage für ein Kraftfahrzeug, mit einem Heizkörper zur Erzeugung von Warmluft, mit wenigstens einem an dem Heizkörper vorbeigeführten Kaltluftkanal, mit in Strömungsrichtung hinter dem Heizkörper vorgesehenen Luftmischräumen, die durch wenigstens eine Trennwand voneinander getrennt sind und in die Luftmischräume jeweils Kalt- und Warmluft durch Luftstromsteuerelemente regelbar einleitbar ist, um die Luft in jedem Mischraum auf eine bestimmte Mischtemperatur zu mischen, um den wenigstens zwei Klimatisierungszonen separat temperierbare Luft zuführen zu können, **dadurch gekennzeichnet, dass** wenigstens ein erster, in dem Heizkörper (22) zu erwärmender Teilluftstrom einen ersten, zugeordneten Teilbereich (22VR und 22VL) des Heizkörpers (22) in eine erste Richtung durchströmt und wenigstens ein zweiter, in dem Heizkörper (22) zu erwärmender Teilluftstrom einen zweiten, zugeordneten Teilbereich (22HR und 22HL) des Heizkörpers (22) in eine zweite, der ersten Richtung entgegengesetzte Richtung durchströmt.

2. Heizungs- oder Klimaanlage nach Anspruch 1, **dadurch gekennzeichnet, dass** der Heizkörper (22) in etwa flachliegend angeordnet ist.

3. Heizungs- oder Klimaanlage nach Anspruch 1 oder 2, **dadurch gekennzeichnet, dass** drei in etwa parallel verlaufende Trennwände (26, 28, 30) vorgesehen sind, so dass die Teilbereiche (22HL, 22VL, 22VR, 22HR) des Heizkörpers (22) nebeneinander angeordnet sind und auf jeder Seite (oberhalb und unterhalb) des Heizkörpers (22) jeweils zwei Luftmischräume (34R, 34L und 64R, 64L) für insgesamt vier Klimatisierungszonen (VL, VR, HL, HR) gebildet sind.

4. Heizungs- oder Klimaanlage nach Anspruch 3, **dadurch gekennzeichnet, dass** die beiden außen gelegenen Luftmischräume (64L und 64R) dem Fondraum links und rechts und die beiden innenliegenden Luftmischräume (VL und VR) dem Frontraum links und rechts zugeordnet sind oder umgekehrt.

5. Heizungs- oder Klimaanlage nach Anspruch 3 oder 4, **dadurch gekennzeichnet, dass** die den Teilluftströmen für den Fondraum zugeordneten äußeren Teilbereiche (22HR und 22HL) des Heizkörpers (22) von oben nach unten und die den Teilluftströmen für den Frontraum zugeordneten inneren Teilbereiche (22VR und 22VL) des Heizkörpers (22) von unten nach oben durchströmt werden.

6. Heizungs- oder Klimaanlage nach einem der vorhergehenden Ansprüche, **dadurch gekennzeichnet, dass** ein Teilbereich jeder Trennwand (28, 30) sich auch über den Kaltluftkanal bis in einen stromaufwärts des Heizkörpers (22) gelegenen Kaltluftbereich (20) zwischen einem Verdampfer (16) und dem Heizkörper (22) erstreckt.

7. Heizungs- oder Klimaanlage nach einem der vorhergehenden Ansprüche, **dadurch gekennzeichnet, dass** die Luftstromsteuerelemente als in etwa mittig gelagerte Drehklappen ausgebildet sind, die leicht gebogen oder abgewinkelt ausgeführt sind, damit die Drehklappen in ihrer Offenstellung die vorbeiströmende Luft strömungsgünstig führen können.

8. Heizungs- oder Klimaanlage nach einem der vorhergehenden Ansprüche, **dadurch gekennzeichnet, dass** der Heizkörper als ein mit Kühlmittel für ein Antriebsaggregat des Kraftfahrzeugs durchströmbarer Wärmetauscher ausgebildet ist und in dem Wärmetauscher elektrische Heizelemente integriert sind.

## Claims

1. Heating or air conditioning system for a motor vehicle, with a heater for generating warm air, with at least one cold air duct routed past the heater, and with air mixing chambers located downstream of the heater in the direction of flow and separated from one another by at least one dividing wall, into which air mixing chambers cold and warm air can be fed in a controllable way by means of airflow control elements in order to mix the air in each mixing chamber to obtain a defined mix temperature with the aim of supplying the at least two air conditioning zones with separately temperature-controlled air, **characterised in that** at least a first partial airflow to be heated in the heater (22) flows through a first associated subsection (22VR and 22VL) of the heater (22) in a first direction and at least one second partial airflow to be heated in the heater (22) flows through a second associated subsection (22HR and 22HL) of the heater (22) in a second direction opposed to the first direction.

2. Heating or air conditioning system according to claim 1, **characterised in that** the heater (22) is arranged to lie approximately flat.

3. Heating or air conditioning system according to claim 1 or 2, **characterised in that** three approximately parallel dividing walls (26, 28, 30) are provided, so that the subsections (22HL, 22VL, 22VR, 22HR) of the heater (22) are arranged adjacent to one another and two air mixing chambers (34R, 34L and 64R, 64L) . for a total of four air conditioning zones (VL, VR, HL, HR) are formed on each side (above and below) of the heater (22).

4. Heating or air conditioning system according to claim 3, **characterised in that** the two outer air mixing chambers (64L and 64R) are assigned to the left- and right-hand rear part of the passenger compartment and the two inner air mixing chambers (VL and VR) are assigned to the left- and right-hand front part of the passenger compartment or vice versa.

5. Heating or air conditioning system according to claim 3 or 4, **characterised in that** air passes through the outer subsections (22HR and 22HL) of the heater (22), which are assigned to the partial airflows for the rear part, from top to bottom and through the inner subsections (22VR and 22VL) of the heater (22), which are assigned to the partial airflows for the front part, from bottom to top.

6. Heating or air conditioning system according to any of the preceding claims, **characterised in that** a part-section of each dividing wall (28, 30) extends over the cold air duct to a cold air region (20) located upstream of the heater (22) between an evaporator (16) and the heater (22).

7. Heating or air conditioning system according to any of the preceding claims, **characterised in that** the airflow control elements are designed as approximately centrally mounted revolving dampers which are slightly bent or angled for the aerodynamic guidance of the air flowing past in their open position.

8. Heating or air conditioning system according to any of the preceding claims, **characterised in that** the heater is designed as a heat exchanger through which a coolant for a drive unit of the motor vehicle can pass and into which electrical heating elements are integrated.

## Revendications

1. Système de chauffage ou de climatisation pour un véhicule automobile, comprenant un radiateur pour la production d'air chaud, au moins un conduit d'air froid passant devant le radiateur, des chambres de mélange d'air prévues derrière le radiateur, lesquelles chambres de mélange d'air sont séparées les unes des autres par au moins une paroi de séparation et de l'air froid et de l'air chaud peuvent être introduits respectivement dans les chambres de mélange d'air, de manière réglable, par des éléments de commande de flux d'air, pour mélanger, à une certaine température de mélange, l'air contenu dans chaque chambre de mélange, pour pouvoir fournir au moins à deux zones de climatisation, de l'air pouvant être tempéré séparément, **caractérisé en ce qu'**au moins un premier flux d'air partiel à chauffer dans le radiateur (22) traverse, dans une première direction, une première zone partielle associée (22VR et 22VL) du radiateur (22) et au moins un second flux d'air partiel à chauffer dans le radiateur (22) traverse, dans une seconde direction opposée à la première direction, une seconde zone partielle associée (22HR et 22HL) du radiateur (22).

2. Système de chauffage ou de climatisation selon la revendication 1, **caractérisé en ce que** le radiateur (22) est disposé à peu près à plat.

3. Système de chauffage ou de climatisation selon la revendication 1 ou 2, **caractérisé en ce qu'**il est prévu trois parois de séparation (26, 28, 30) s'étendant de manière à peu près parallèle, de sorte que les zones partielles (22HL, 22VL, 22VR, 22HR) du radiateur (22) sont disposées les unes à côté des autres et, de chaque côté (au-dessus et au-dessous) du radiateur (22) sont formées, respectivement, deux chambres de mélange d'air (34R, 34L et 64R, 64L) pour au total quatre zones de climatisation (VL, VR, HL, HR).

4. Système de chauffage ou de climatisation selon la revendication 3, **caractérisé en ce que** les deux chambres de mélange d'air (64L et 64R) placées à l'extérieur sont affectées à l'espace arrière, côté gauche et droite, et les deux chambres de mélange d'air (VL et VR) placées à l'intérieur sont affectées à l'espace avant, côté gauche et droite, ou inversement.

5. Système de chauffage ou de climatisation selon la revendication 3 ou 4, **caractérisé en ce que** les zones partielles extérieures (22HR et 22HL) du radiateur (22), affectées aux flux d'air partiels pour l'espace arrière, sont traversées du haut vers le bas, et les zones partielles intérieures (22VR et 22VL) du radiateur (22), affectées aux flux d'air partiels pour l'espace avant, sont traversées du bas vers le haut.

6. Système de chauffage ou de climatisation selon l'une quelconque des revendications précédentes, **caractérisé en ce qu'**une zone partielle de chaque paroi de séparation (28, 30) s'étend également entre un évaporateur (16) et le radiateur (22), via le conduit d'air froid, jusqu'à une zone d'air froid (20) placée en amont du radiateur (22).

7. Système de chauffage ou de climatisation selon l'une quelconque des revendications précédentes, **caractérisé en ce que** les éléments de commande de flux d'air sont configurés comme des volets rotatifs montés à peu près au milieu, lesquels volets rotatifs sont réalisés en étant légèrement courbes ou coudés, afin que, dans leur position ouverte, ils puissent, de façon favorable à l'écoulement, laisser passer l'air s'écoulant.

8. Système de chauffage ou de climatisation selon l'une quelconque des revendications précédentes, **caractérisé en ce que** le radiateur est conçu comme un échangeur de chaleur pouvant être traversé par un agent réfrigérant utilisé pour un groupe d'entraînement de véhicule automobile, et des éléments chauffants électriques sont intégrés dans l'échangeur de chaleur.
